# EUROPEAN PATENT APPLICATION

(11) **EP 1 887 313 A1**
(43) Date of publication of application: **13.02.2008**
(21) Application number: 06270073.7
(22) Date of filing: 31.07.2006
(51) Int. Cl.: G01B 11/00, G01S 5/16

(54) **Location determination system and method of location determination**

(71) Applicant: Agilent Technologies, Inc., Santa Clara, CA 95051 (US)
(72) Inventor: Mitchell, Kevin, West Lothian EH30 9TG (GB)
(74) Representative: Kurz, Peter

(57) **Abstract**

A location determination system (102) comprises first and second pairs of spaced light sources (106, 108) capable of transmitting first and second pairs of distinguishing data respectively associated therewith and for illuminating a room with substantially white light. A sensor (110) is provided in the room (103) and has an array of cells (200) and an optical director (202) disposed adjacent the array of cells (200) to direct light incident over a wide angle of incidence to the array (200). A processing resource (204) is coupled to the sensor (110) and arranged to estimate a first angle (θ₁) subtended by the first pair of spaced light sources (106, 108) from the sensor (110) and a second angle (θ₂) subtended by the second pair of light sources from the sensor (110). The processing resource (204) is further arranged to estimate a closest common position in space between surfaces respectively associated with the first and second estimated angles (θ₁, θ₂).

## Description

The present invention relates to a location determination system of the type that, for example, comprises a sensor exposed to a plurality of spaced light sources. The present invention also relates to a method of location determination of the type that, for example, comprises exposing a sensor to a plurality of light spaced light sources.

In the field of indoor location determination, a number of solutions to the problem of determining a location of a body within a room are known. For example, US patent publication no. 2006/033662 relates to a system that employs Ultra-WideBand (UWB) pulses and a so-called "tag" to determine the location of an object to within an accuracy of 5 cm. However, the physical dimensions of the tag are inconveniently large and so, should it be necessary to attach a number of tags to a person, such a contingency is unlikely due to the cumbersome nature of the tags. Also, the cost of the system is unacceptably high.

"The Cricket Location-Support System" (N. B. Prigantha, A. Chakroborty, H. Balakrishnan, 6th ACM International Conference on Mobile Computing and Networking (ACM MOBICOM), Boston, MA, August 2000) describes a system that uses a combination of RF and ultrasound technologies to determine a location of a sensor within a room. However, costs associated with infrastructure and sensors of the system are again unacceptably high for the level of accuracy achieved by the system.

"A smart image sensor with high-speed feeble ID-beacon detection for augmented reality system" (Y. Oike, M. Ikeda, K. Asada, Proceedings of the 29th European Solid-State Circuits Conference, ESSCIRC '03, 16-18 September 2003) describes a smart image sensor with ID-Beacon detection. The sensor is used as part of a so-called "Augmented Reality (AR)" system that is designed to provide an enhanced view of the real world with meaningful information from a computer. However, the recognition of one or more beacons is, as explained above, part of the AR system rather than a location determination system.

According to a first aspect of the present invention, there is provided a location determination system comprising: a plurality of spaced light sources for illuminating a room with substantially white light, the plurality of spaced light sources including a first pair of spaced light sources arranged to transmit, when in use, a first pair of distinguishing data so as to distinguish the first pair of light sources from each other and a second pair of spaced light sources arranged to transmit, when in use, a second pair of distinguishing data so as to distinguish the second pair of light sources from each other; a sensor having an array of cells arranged to receive light bearing the first and second pairs of distinguishing data, an optical director being disposed adjacent the array of cells to direct light, when in use, in a directionally segmented manner onto the array of cells; and a processing resource coupled to the array of cells and arranged to use the first and second pairs of distinguishing data to identify pre-stored cell-specific direction data in order to estimate respectively a first angle subtended by the first pair of spaced light sources from the array of cells and a second angle subtended by the second pair of spaced light sources from the array of cells; wherein the processing resource is further arranged to estimate a closest common position in space to surfaces respectively associated with the first and second estimated angles and estimated using first and second pairs of a priori coordinate data respectively associated with the first and second pairs of light sources.

Each cell may have a substantially mutually exclusive range of input angles with respect to other ranges of input angles contributing to an overall field of view of the array of cells. The overall field of view of the array of cells may be greater than 90°, for example greater than 100°, such as greater than 120°.

The processing resource may be arranged to generate a first weight in respect of a first estimated surface associated with the first estimated angle and/or a second weight in respect of a second estimated surface associated with the second estimated angle.

The processing resource may be arranged to estimate orientation of the array of cells.

The closest common position in space to the estimated surfaces may be calculated by employing a least squares algorithm.

The common position in space may be determined by calculating a sum of distances, the sum of distances including a closest distance between a first surface and a second surface of the surfaces estimated. The sum may be weighted. The sum of distances may be minimised, for example using the least squares algorithm.

The system may further comprise a search space including the closest common position in space.

A volume may constitute the search space. The volume may be a notional cube.

The search space may be reduced using a priori knowledge concerning the first pair of spaced light sources and/or the second pair of spaced light sources and/or the array of cells.

The a priori knowledge may be that the first and second pairs of spaced light sources lie in a plane spaced from the array of cells in a direction perpendicular to the plane, for example on a ceiling. The a priori knowledge may be that the array of cells is disposed at a fixed distance from a plane of the first and second pairs of spaced lights. The a priori knowledge may be a last estimated or known location of the array of cells.

The processing resource may be further arranged to search the search space in order to find an improved estimated common position in space to the estimated surfaces.

The estimated surfaces may be spindle tori.

The first pair of spaced light sources may transmit the first pair of a priori coordinate data so as to communicate respective locations of each light source of the first pair of spaced light sources; the distinguishing data may comprise a priori coordinate data. The second pair of spaced light sources may transmit the second pair of a priori coordinate data so as to communicate respective locations of each light source of the second pair of spaced light sources. A data store may be provided to store the first pair of a priori coordinate data and/or the second pair of a priori coordinate data.

The first pair of spaced light sources may comprise a first pair of identities so as to distinguish the first pair of spaced light sources from each other. The second pair of spaced light sources may comprise a second pair of identities so as to distinguish the second pair of spaced light sources from each other. The data store may store associations between the identities and the a priori coordinate data.

The plurality of light sources may comprise an array of light emitting diodes. A light emitting diode of the array of light emitting diodes may be modulated for transmitting data to identify uniquely the array of light emitting diodes.

The plurality of light sources may comprise a light emitting diode powered by light from a neighbouring light source.

The pre-stored cell-specific direction data may comprise first direction data and second direction data, the first angle being between a first direction associated with the first direction data and a second direction associated with the second direction data.

The pre-stored cell-specific direction data may comprise third direction data. The second angle may be between a third direction associated with the third direction data and one of the first or second directions.

The first direction data may have a first error associated therewith and the second direction data has a second error associated therewith, the first and second errors being associated with respective first and second sensing coverage areas of first and second cells of the array of cells at an orientation of the array of cells.

The first error may be used to determine the first weight associated with the first estimated surface and/or the second error is used to determine the first weight associated with the first estimated surface.

A known or estimated orientation of the array of cells may be used to determine the first and/or second errors.

The known or estimated orientation may be used to re-evaluate the estimated surfaces.

According to a second aspect of the present invention, there is provided a method of location determination, comprising: a first pair of spaced light sources transmitting a first pair of distinguishing data so as to distinguish the first pair of light sources from each other; a second pair of spaced light sources transmitting respectively a second pair of distinguishing data so as to distinguish the second pair of light sources from each other; receiving light bearing the first and second pairs of distinguishing data at a sensor disposed adjacent an optical director, the optical director directing light onto an array of cells thereof in a directionally segmented manner; using the first and second pairs of distinguishing data to estimate respectively a first angle subtended by the first pair of spaced light sources from the array of cells and a second angle subtended by the second pair of spaced light sources from the array of cells; estimating a closest common position in space to surfaces respectively associated with the first and second estimated angles, the surfaces being estimated using first and second pairs of a priori coordinate data respectively associated with the first and second pairs of light sources.

It is thus possible to provide a location determination system and method of location determination that provides accurate location determination of the sensor in the room whilst being capable of achieving an associated implementation cost that is lower than the implementation cost of other, known, location determination systems and methods of comparable accuracy.

At least one embodiment of the invention will now be described, by way of example only, with reference to the accompanying drawings, in which:
**Figure 1** is a schematic diagram of a location determination system provided in a room;
**Figure 2** is a schematic diagram of a sensor unit used in the system of Figure 1;
**Figure 3** is a flow diagram of a method of determining a location of the sensor of Figures 1 and 2;
**Figure 4** is a schematic diagram of a view of a ceiling as observed by an array of cells of the sensor of Figure 2;
**Figure 5** is a schematic diagram of areas of coverage of a cell of the sensor unit of Figure 2 at different orientations;
**Figure 6** is a schematic diagram of angles subtended between a pair of light sources and the sensor of Figures 1 and 2; and
**Figure 7** is a schematic diagram of a spindle torus generated by the sensor of Figure 2.

Throughout the following description identical reference numerals will be used to identify like parts.

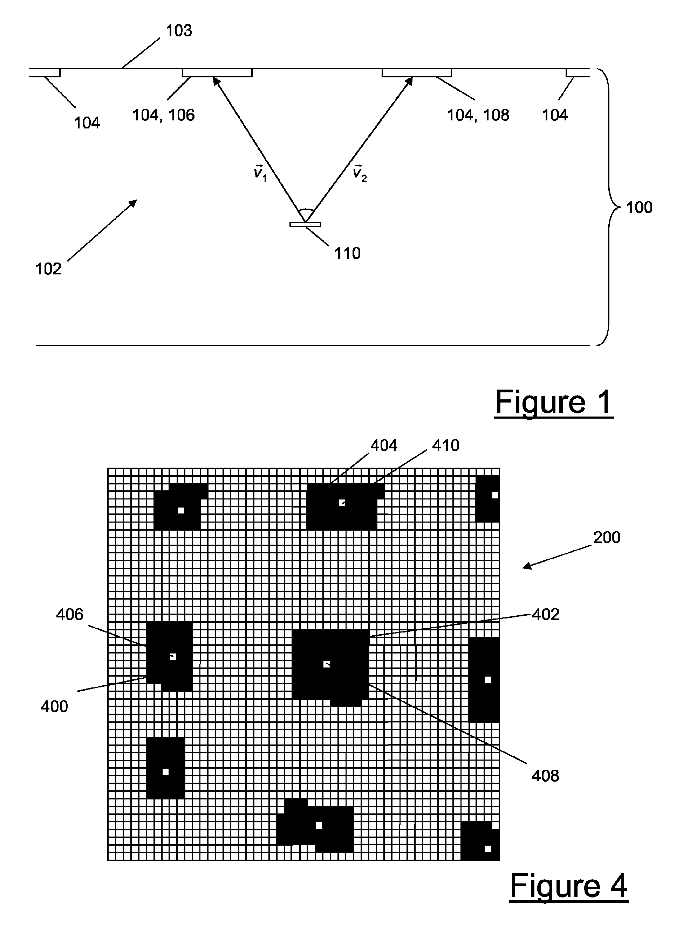

Referring to Figure 1, a room 100 comprises a location determination system 102 including a plurality of light sources 104 mounted on a ceiling 103 of the room 100, including a first light source 106 and a second light source 108 constituting a first pair of light sources. Although, in this example, the plurality of light sources 104 is ceiling mounted, the plurality of light sources 104 can include light sources mounted on another surface, for example one or more wall-mounted light sources (not shown).

In this example, the plurality of light sources 104 is a plurality of Light-Emitting Diode (LED) arrays, for example an array of Luxeon^{®} LEDs available from Philips Lumileds Lighting Company, LLC. The plurality of LED arrays emits light that is substantially white for illuminating the room. Each LED array is capable of being pulse width modulated in order to transmit digital data that is not perceivable by the human eye, but can be detected by a sensor 110. To this end, each LED array of the plurality of light sources 104 is provided with a control circuit (not shown) to enable each LED array to transmit data capable of distinguishing each LED array from the other LED arrays amongst the plurality of light sources 104. Consequently, the first light source 106 is arranged to transmit a first unique identity (ID) code and the second light source 108 is arranged to transmit a second unique ID (UID), different from the first UID.

Although, in the above example, all LEDs of each array are modulated, the skilled person will appreciate that only a proportion of all LEDs of a given LED array need to be modulated to transmit the distinguishing data described. In this respect, one or a proportion of LEDs located at the centre of each array of LEDs can be modulated in order to identify the centre of each LED array. As will become apparent from the description later herein, the location determination system 102 identifies centres of the arrays of LEDs as part of the process of location determination. If the centre of each array of LEDs is specifically identified by a respective UID, accuracy of estimation of centres of the LED arrays is improved.

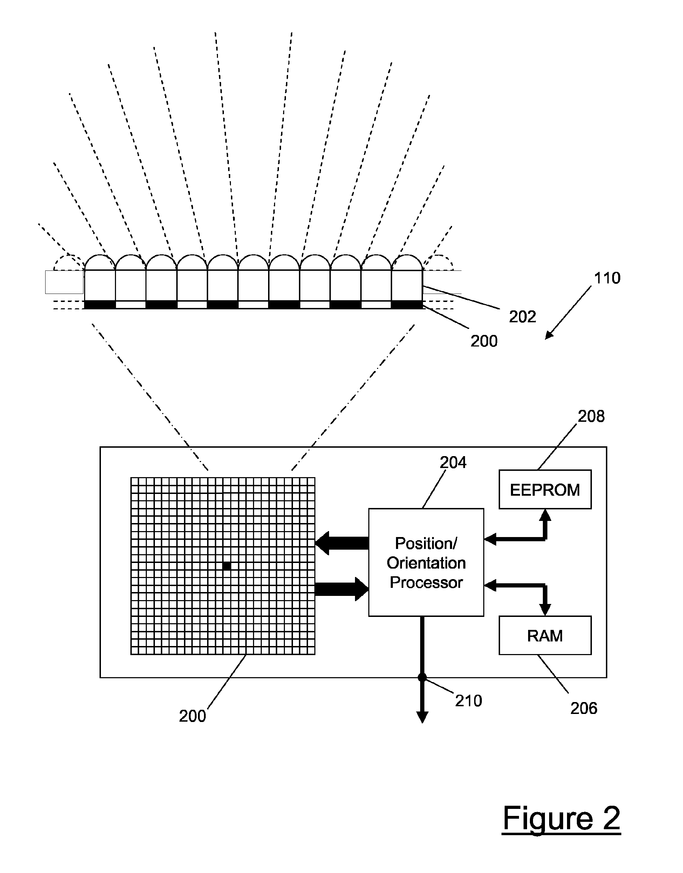

Turning to Figure 2, the sensor 110 comprises an N x N array of photosensitive cells, for example an array of 51 x 51 cells 200. Such an array of cells 200 is achieved, in this example, by adapting a Complementary Metal Oxide Semiconductor (CMOS) optical mouse sensor available from Agilent Technologies Inc. The array of cells 200 is overlaid by an optical director 202. In this example, the optical director 202 is a microlens array; each microlens of the array serves to provide an overall field of view greater than, for example 90°, such as a field of view greater than 100° or 120°. Each cell of the array of cells 200 is overlaid by a dedicated microlens and has a distinct range of input angles that is a subset to the overall field of view of the microlens array. In this example, a centre of the range of input angles for each microlens increases, relative to the surface normal of the array of cells 200, with distance from a microlens at the centre of the microlens array. Hence, distinct ranges of input angles associated with microlenses at the periphery of the microlens array have respective centres that are greater, relative to the surface normal of the array of cell 200, than centres of distinct ranges of input angles associated with the microlens at the centre of the microlens array, for example -5° to +5° has a centre at 0° as compared with -95° to -85°, having a centre at -90°. A notional hemisphere disposed at a given distance opposite the microlens array has a plurality of substantially mutually exclusive contiguous areas, each cell of the array of cells 200 "mapping", by virtue of the presence of the microlens array, to a different one of the areas. The areas constitute segments in a non-mathematical sense. Consequently, light propagating from each segment is directed to a corresponding cell of the array of cells 200. Of course, the skilled person will appreciate that other mapping strategies can be employed where given cells map to specifically selected segments on the notional hemisphere. In any event, as the given distance of the hemisphere from the array of cells 200 increases, the surface area of each segment increases uniformly so that a centre of each segment remains the centre of the segment. However, if each cell of the array of cells 200 is "mapped" onto a planar surface, for example the ceiling 103, the segments corresponding to distinct ranges of input angles closest to the surface normal of the planar surface occupy a smaller area of the planar surface than segments having distinct ranges of input angles further away from the surface normal of the planar surface. Consequently, when the array of cells 200 lies parallel to the planar surface, cells at the centre of the array of cells 200 map to smaller areas on the planar surface than cells at the periphery of the array of cells 200. Of course, the skilled person will appreciate that other optical elements or arrangements can serve as the optical director 202, for example a single wide-angled lens, or an array of light guides arranged to collect light over a wider field of view than the array of cells 200 in a planar formation.

A processing resource 204, for example a microprocessor, is operably coupled to the array of cells 200, a volatile memory device, for example a Random Access Memory (RAM) 206 being coupled to the processing resource 204. A non-volatile memory device, for example an Electronically Erasable Programmable Read Only Memory (EEPROM) 208 is also coupled to the processing resource 204. An output interface 210, for example, a wired interface, such as a serial interface conforming to any suitable communications standard, is also coupled to the processing resource 204.

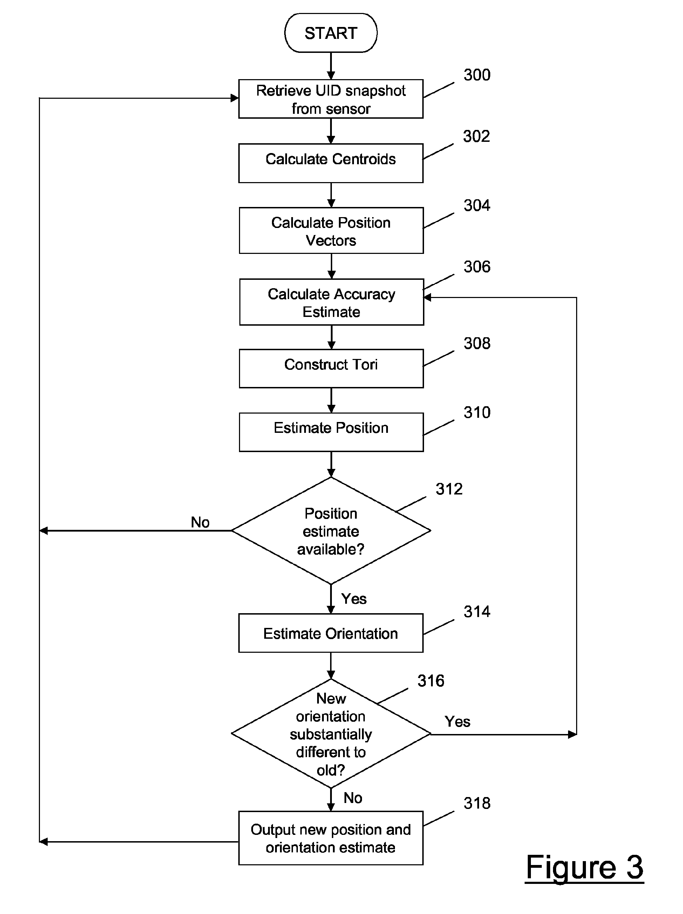

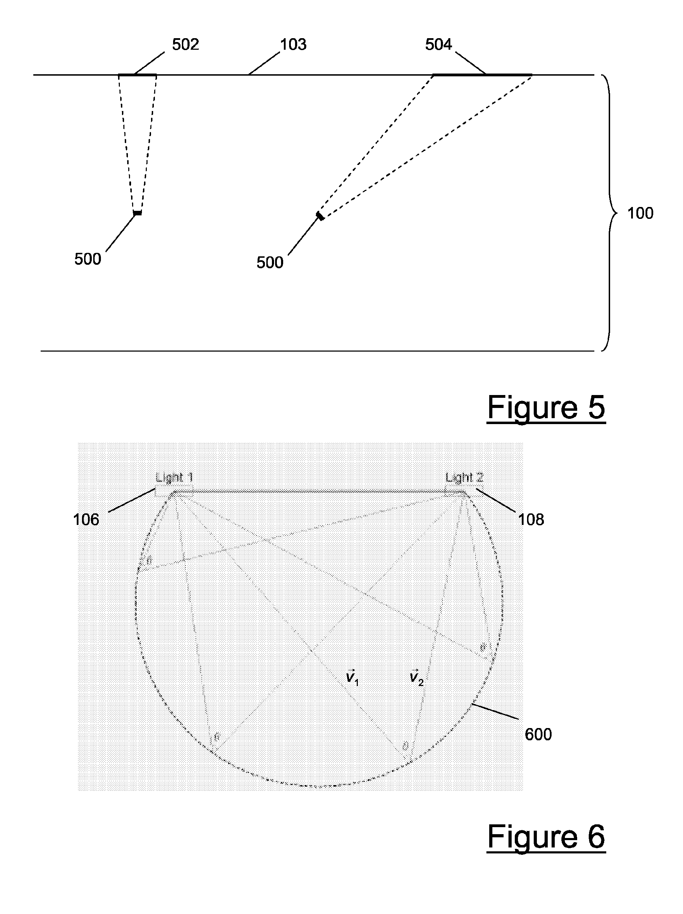

In operation (Figure 3), the sensor 110 is introduced in the room 100, the first and second light sources 106, 108 being "in view" of the sensor 110, i.e. within the field of view of the sensor 110. A number of cells of the array of cells therefore receive light from both the first and second light sources 106, 108. Referring to Figure 4, the first UID transmitted by the first light source 106, is received by a first cluster 400 of cells of the array of cells 200.

Similarly, the second UID transmitted by the second light source 108 is received by a second cluster 402 of cells of the array of cells. A third cluster of cells 404 receives a third UID transmitted by a third light source (not shown in Figure 1). Hence, the second light source 108 and the third light source constitute a second pair of light sources. The third light source and the first light source likewise constitute a third pair of light sources, although the third pair of light sources, for the sake of clarity and ease of understanding, is not used in this example when determining the location of the sensor 110.

The processor 204 therefore detects, for each cell of the array of cells 200, whether each cell is receiving light bearing a UID. Referring to Figure 3, the processor 204 samples (Step 300) the data received by the array of cells 200 in order to obtain a snapshot of all cells of the array of cells 200, where UIDs have been received.

As a number of cells may detect light from the same light source, as indicated above by reference to the first, second and third clusters of cells 400, 402, 404, the processor 204 estimates (Step 302) a coordinate of a cell closest to a centre of each cluster. Also, as mentioned above, by only using LEDs at centres of the arrays of LEDs to transmit UIDs, the task of identifying the centre of each cluster is facilitated. Hence, the processor 204 estimates a first centroid cell 406 closest to the centre of the first cluster of cells 400, a second centroid cell 408 closest to the centre of the second cluster of cells 402, and a third centroid cell 410 closest to the centre of the third cluster of cells 404.

Next, the processor 204 has to identify (Step 304), for each pair of light sources, a pair of input direction vectors. In this respect, each cell of the array of cells 200 has an input direction vector associated therewith. Due to the presence of the microlens array overlying the array of cells 200, the cell at the centre of the array of cells 200 corresponds to an input direction vector that is the normal to the surface of the array of cells 200. However, the angle of the input direction vector relative to the surface normal of the array of cells 200 points increasingly outwardly with distance from the centre of the microlens array. Hence, cells of the array of cells 200 at the periphery of the array of cells 200 point in a more outwardly direction relative to the surface normal that cells closer to the centre of the array of cells 200. The input direction vectors are cell-specific and effectively set at the time of manufacture of the sensor 110 and correspond respectively to the segments mentioned previously. The input direction vectors are stored in the EEPROM 208 prior to use of the sensor 110, or can be "hardwired" into an integrated circuit, for example an Application Specific Integrated Circuit (ASIC). Consequently, the pair of input direction vectors is obtained by accessing the EEPROM 208 and looking-up the input direction vectors corresponding to the centroid cells estimated above.

In relation to the present example, the processor 204 identifies (Step 304) a first input direction vector, *̅v̅*̅₁, corresponding to the first centroid cell 406 and hence the first light source 106. Likewise, a second input direction vector, *̅v̅*̅₂, corresponding to the second centroid cell 408 and hence the second light source 108 is identified (Step 304) and a third input direction vector, *̅v̅*̅₃ , corresponding to the third centroid cell 410 and hence the third light source is identified (Step 304). Due to the relatively small size of the array of cells 200 as compared with the distance of the array of cells 200 from the ceiling 103 where the plurality of light sources 104 are located, each input direction vector is a vector estimated effectively as from the centre of the array of cells 200 without any appreciable loss of accuracy.

However, as explained above, centroid cells, like other cells of the array of cells 200, map to respective segments on the ceiling 103. Due to the nature of the optical director 202, some cells map to larger areas on the ceiling 103 than others. Consequently, a centroid cell corresponds to a segment in which the centre of an array of LEDs lies. Hence, it will be appreciated that where the area of the segment is larger, a larger number of possibilities exist as to the precise location of the centroid cell relative to the centre of the array of LEDs lying within the segment and thus impacts upon precision of determination of the location of the cell corresponding to the segment.

Further, the mapping of the cells of the array of cells to segments on the ceiling 103 also depends upon the orientation of the input direction vectors relative to the ceiling 103. Hence, it can be seen that orientation of the array of cells 200 impacts upon the accuracy mentioned above for a given cell of the array of cells that maps to a segment in which it has been identified that a centre of an array of LEDs resides. This can be seen if one notionally projects from a given cell, through a corresponding sector of the notional hemisphere, onto the ceiling 103, which is planar. Due to the segmented field of view provided by the optical director 202 to each cell of the array of cells 200, a given cell 500 of the array of cells 200 maps to a larger or smaller area of the ceiling 103 of the room 100, depending upon the relative orientation of the given cell 500 to the ceiling 103. For example, referring to Figure 5, if the sensor 110 is horizontal and the given cell 500 is at the centre of the array of cells 200, the given cell 500 maps to a smaller area 502 of the ceiling 103, i.e. has a smaller coverage or receipt area, than if the sensor 110 had an angled orientation in space. When oriented relative to the horizontal, the given cell 500 can receive light from a larger area 504 of the ceiling 103.

Hence, where the given cell 500 of the array of cells 200 is oriented at an angle to a surface where the plurality of light sources 104 are disposed, in this example the ceiling 103, the location of the array of cells 200 relative to a given light source on the ceiling 103 that has been detected by the given cell 500 of the array of cells 200 is estimated with less certainty, because as mentioned above there exists a greater area within which the given light source is located, than for a cell of the array of cells 200 that, overlaid by a part of the optical director 202, is effectively lying in parallel with the ceiling 103. Consequently, selection of a given centroid cell corresponding to the given light source and hence a corresponding input direction vector identified can relate to a larger surface area of the ceiling 103 than where the given cell lies in parallel with the ceiling 103. The given input direction vector can therefore inherently have a greater margin of error associated with it. This can also be true for cells that lie parallel to the ceiling 103, but are located at the periphery of the array of cells 200. However, as will be appreciated by the skilled person, if oriented appropriately, the orientation of the array of cells 200 can result in an input direction vector of a peripheral cell of the array of cells 200 being closer to the surface normal of the ceiling 103 and hence mapping to a smaller area of the ceiling 103 than a cell located at the centre of the array of cells 200. In such circumstances, precision associated with the peripheral cell can be greater than that associated with the central cell. Hence, the skilled person will appreciate that the area of the ceiling covered or "supported" by a cell of the array of cells 200 is dependent upon the orientation in three-dimensions of the array of cells 200.

An initial estimate is therefore made (Step 306) of the orientation of the array of cells 200 in order to estimate impact of orientation of the array of cells 200 relative to the ceiling 103 on the selection of the first, second and third input direction vectors, *̅v̅*̅₁*,v̅*₂ *̅v̅*̅₃*.* This initial estimate is used, in this example, to calculate an accuracy factor based upon an estimated uncertainty (or error) associated with the first, second and third centroid cells 406, 408, 410 of the array of cells 200 corresponding to the first, second and third light sources. In this example, the estimated uncertainty is heuristic in nature, a value between 0 and 1 on, for example a linear sliding scale, being allocated to each cell of the array of cells 200 depending upon the magnitude of area on a planar surface, i.e. the ceiling 103, covered by each cell of the array of cells 200 for the current orientation of the sensor 110. For each pair of light sources, a combined accuracy factor is calculated using individual accuracy factors for centroid cells associated with each pair of light sources. As orientation cannot always be readily determined, a previous orientation estimate of the array of cells 200 is used or where no previous estimate is available, for example during a first iteration of the above method steps, the orientation is guessed as horizontal. After an initial estimate of the location of the sensor 110 is made, an improved estimate of the orientation of the array of cells 200 can be made, as is described later hereinbelow.

Once the initial estimate of the orientation of the array of cells 200 has been carried out, the processor 204 uses a first pair of input direction vectors, *̅v̅*̅₁,*̅v̅*̅₂, associated with the first pair of light sources, and a second pair of input direction vectors, *̅v̅*̅₂*,v̅*₃*,* associated with the second pair of light sources, to estimate a first surface and a second surface, respectively. In this respect, the first pair of input direction vectors *̅v̅*̅₁*, v̅*₂ is used to determine a first angle θ₁ that the first and second light sources 206, 208 subtend from the sensor 110. Likewise, the second pair of input direction vectors *̅v̅*̅₂, *̅v̅*̅₃ is used to determine a second angle θ₂ that the second and third light sources 208, - subtend from the sensor 110.

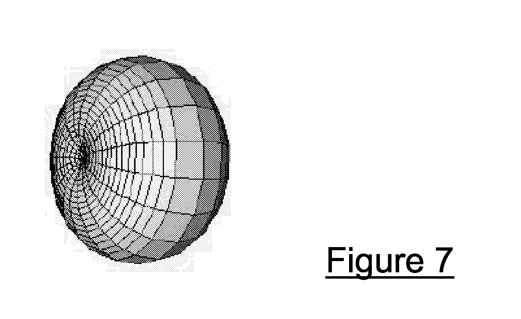

In relation to the first angle θ₁ (Figure 6), in two dimensions, the apex of the first and second input direction vectors, *̅v̅*̅₁*,v̅*₂ and hence the possible locations of the array of cells 200 can lie on a first arc 600. The profile of the first arc 600 depends upon whether the first angle θ₁ is greater than or less than 90°. Likewise, the apex of the second and third input direction vectors *̅v̅*̅₂,*̅v̅*̅₃ lies on a second arc (not shown) in two-dimensional space. Extending the possible locations of the array of cells 200 into three dimensions, the possible locations of the array of cells 200 can lie on the first estimated surface and the estimated second surface. The first estimated surface results by extension of the two-dimensional first arc 600 to three dimensions, and the second estimated surface results by extension of the two-dimensional second arc to three dimensions. Extension of the first and second arcs to three dimensions results in the first and second surfaces being a first spindle torus and a second spindle torus (Figure 7). Hence, the first and second surfaces, being in this example spindle tori, are estimated (Step 308) using the first pair of selected input direction vectors, *̅v̅*̅₁, *̅v̅*̅₂ and the second pair of selected input direction vectors, *̅v̅*̅₂, *̅v̅*̅₃*.*

However, in order to construct an estimate of a given surface, the processor 204 needs location data identifying a location for each light source associated with the input direction vectors selected. Consequently, three-dimensional positions in space of each light source in the room 100 involved in the location determination system are stored, prior to use of the sensor 110 in the system 102, in the EEPROM 208 for retrieval and use by the processor 204 when estimating surfaces. Alternatively, each of the plurality of light sources can be configured to transmit a respective location of each light source for receipt by the sensor 110 as part of the respective UID. The skilled person will, of course, appreciate that a mixture of stored and transmitted location data can be employed. The location data used by the processor 204 constitutes a priori coordinate data.

Once the first and second surfaces have been estimated (Step 308), the processor 204 tries to find a position in three-dimensional space (Step 410) having a minimum distance to the estimated surfaces. Of course, although only the first and second surfaces have been described above for the sake of simplicity of description, other surfaces are estimated (Step 308) in addition to the first and second surfaces. In this example, the processor 204 samples points on the first surface and calculates corresponding sums of distances from each sampled point to the other estimated surfaces calculated. The choice of the first surface for sampling is arbitrary and each distance calculated as part of the sum for a given sampled point is, in this example, weighted by a respective combined accuracy factor (calculated above) associated with the surface to which the distance from the given sample point is being calculated. In order to determine the minimum sum of distances, any suitable least squares algorithm known in the art is employed (Step 310). The minimised sum then serves as a basis for constructing a search space within which to search for locations in space that may prove a more accurate indication of the actual position of the sensor 110 than the position in space initially estimated using the least squares technique. In this example, the search space is bounded by a notional cube of a predetermined volume, for example 20cm³, centred upon the location in space determined by the above least squares technique. The search space is then iteratively searched in order to identify an improved estimate of the location in space of the sensor 110. The improved estimate of the location of the sensor 110 can then be used as a centre for another, reduced, volume search space, for example a smaller notional cube, which is then also searched iteratively in order to identify a further improved location in space of the sensor 110. The process of reducing the search space volume can be repeated as often as required, subject to a volume threshold, in order to further improve estimates of the location of the sensor 110.

It should be appreciated that calculation of the initial estimate of the position in space of the sensor 110 can be simplified, and/or the search space used for refinement of the initial estimate constrained, using any available a priori information. For example, such a priori knowledge can be that the first and second pairs of light sources are known to be disposed in the ceiling, i.e. a plane, the sensor being capable of occupying a position that is in a range of distances from the plane. In one example of this constraint, if it is known that the sensor is disposed horizontally on a robot of fixed height, only a "slice" of the space of the room 100 need be considered. A last estimated or known position of the sensor is another example of the a priori knowledge.

If during the process of estimating the position in space of the sensor 110, the estimated position is deemed (Step 312) unacceptably inaccurate, for example if an insufficient number of light sources are available to provide a necessary level of accuracy, the processor 204 repeats the above steps in respect of a subsequent sample (Step 300) of the information obtained by the array of cells 200 as a result of light incident thereupon from one or more of the plurality of light sources 104. By repeating the above steps until a sufficiently accurate position estimate can be calculated, the system 102 inherently waits until the sensor 110 is located in a position where, for example, a sufficient number of light sources are "visible" to the sensor 110 or optical resolving problems caused by unexpected alignment of light sources relative to the sensor 110 have subsided.

If it is deemed (Step 312) possible to produce this estimate of the position in space of the sensor 110, the processor 204 attempts to improve (Step 314) the initial estimate of the orientation of the array of cells 200. In this respect, the processing resource arbitrarily selects one of the centroid cells of the array of cells 200, for example one of the first, second or third centroid cells 406, 408, 410, and selects the input direction vector associated with the selected centroid cell. The processing resource 204 then calculates a quaternion needed to rotate the sensor 110 from a predetermined initial conceptual orientation, for example a horizontal position, so that the selected input direction vector associated with the selected centroid cell of the array of cells 200 points to the source of light from which the selected centroid cell is actually receiving an associated UID. Once the quaternion has been determined, a rotation is established by the processor 204, using an iterative procedure, in order to determine the orientation for which illumination of, in this example, the centroid cells receiving light from the first, second and third light sources is optimum. Of course, optimum illumination of other cells can be considered in respect of other light sources of the plurality of light sources 104 if necessary. Additionally, if required, the above orientation procedure can be implemented in respect of more than one selected centroid cell and an average orientation calculated. Once the orientation has been estimated, pitch, roll and yaw values can be calculated to express the orientation of the sensor 110 relative to the initial conceptual orientation estimated, in this example, orientation in a horizontal plane.

The processor 204 then determines (Step 316) whether the re-calculated estimate of orientation is substantially different to the initial, previous, estimate of the orientation of the sensor 110. For example, an orientation difference threshold can be used to make such a determination; the orientation difference threshold can vary, for example reduce with reduction in difference between estimated positions of the sensor 110 over successive iterations of the above location determination calculations. If the re-calculated estimate of orientation of the sensor 110 does not differ substantially from the previously estimated orientation, the processor 204 sends (Step 318) the position in space and orientation of the sensor 110 already estimated to a central monitoring centre (not shown) via the output interface 210. Thereafter, the processor 204 repeats the above process for estimating the position in space of the sensor 110, starting by taking another sample of the data received by the array of cells 200 and using the most recent available estimate of the orientation of the sensor 110.

In the event that the processor 204 determines (Step 316) that the re-calculated estimate of orientation is substantially different to the previous estimate of the orientation of the sensor 110, the processor 204 reverts to the step of calculating the combined accuracy factors (Step 306) for each estimated surface and corresponding to respective pairs of light sources, such as the first and/or second pairs of light sources. The processor 204 then continues the flow of the above process by re-estimating the surfaces in order to estimate the position in space of the sensor 110 and instead of arbitrarily selecting an estimated surface for calculation of the minimised sum of the distance from the point in space to other estimated surfaces, selects the surface associated with the most favourable combined accuracy factor calculated.

As can be seen, the above steps are performed in order to provide, update and/or refine the estimate of the position in space of the sensor 110.

Although in the above example, reference has been made to the location and/or orientation of the sensor 110, such reference has been made for ease of understanding of the above embodiment based upon an assumption that the circuitry coupled to the array of cells 200 is packaged in a substantially planar manner. However, the skilled person will appreciate that should the packaging of the sensor 110 differ to a sufficiently different degree to alter the ability, in some instances, to refer interchangeably to the array of cells 200 or the sensor 110, reference needs to be made to the array of cells 200.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A location determination system (102) comprising:
a plurality of spaced light sources (104, 106, 108) for illuminating a room with substantially white light, the plurality of spaced light sources including a first pair of spaced light sources (106, 108) arranged to transmit, when in use, a first pair of distinguishing data so as to distinguish the first pair of light sources from each other and a second pair of spaced light sources arranged to transmit, when in use, a second pair of distinguishing data so as to distinguish the second pair of light sources from each other;
a sensor (110) having an array of cells (200) arranged to receive light bearing the first and second pairs of distinguishing data, an optical director being disposed adjacent the array of cells (200) to direct light, when in use, in a directionally segmented manner onto the array of cells; and
a processing resource (204) coupled to the array of cells (200) and arranged to use the first and second pairs of distinguishing data to identify pre-stored cell-specific direction data in order to estimate respectively a first angle (θ₁) subtended by the first pair of spaced light sources (106, 108) from the array of cells (200) and a second angle (θ₂) subtended by the second pair of spaced light sources from the array of cells (200); wherein
the processing resource (204) is further arranged to estimate a closest common position in space to surfaces respectively associated with the first and second estimated angles (θ₁, θ₂) and estimated using first and second pairs of a priori coordinate data respectively associated with the first and second pairs of light sources.

2. A system as claimed in Claim 1, wherein the processing resource (204) is arranged to generate a first weight in respect of a first estimated surface associated with the first estimated angle (θ₁) and/or a second weight in respect of a second estimated surface associated with the second estimated angle (θ₂).

3. A system as claimed in Claim 1 or Claim 2, wherein the processing resource (204) is arranged to estimate orientation of the array of cells (200).

4. A system as claimed in any one of the preceding claims, further comprising a search space including the closest common position in space.

5. A system as claimed in Claim 4, wherein the search space is reduced using a priori knowledge concerning the first pair of spaced light sources (106, 108) and/or the second pair of spaced light sources and/or the array of cells (200).

6. A system as claimed in Claim 4, wherein the processing resource (204) is further arranged to search the search space in order to find an improved estimated common position in space to the estimated surfaces.

7. A system as claimed in any one of the preceding claims, wherein the pre-stored cell-specific direction data comprises first direction data and second direction data, the first angle (θ₁) being between a first direction associated with the first direction data and a second direction associated with the second direction data.

8. A system as claimed in any one of the preceding claims, wherein the first direction data has a first error associated therewith and the second direction data has a second error associated therewith, the first and second errors being associated with respective first and second sensing coverage areas of first and second cells of the array of cells (200) at an orientation of the array of cells (200).

9. A system as claimed in Claim 8, when dependent upon Claim 2, wherein the first error is used to determine the first weight associated with the first estimated surface and/or the second error is used to determine the first weight associated with the first estimated surface.

10. A system as claimed in Claim 8, when dependent upon Claim 2, wherein a known or estimated orientation of the array of cells (200) is used to determine the first and/or second errors.

11. A system as claimed in Claim 10, wherein the known or estimated orientation is used to re-evaluate the estimated surfaces.

12. A method of location determination, comprising:
a first pair of spaced light sources transmitting a first pair of distinguishing data so as to distinguish the first pair of light sources from each other;
a second pair of spaced light sources (106, 108) transmitting respectively a second pair of distinguishing data so as to distinguish the second pair of light sources from each other;
receiving light bearing the first and second pairs of distinguishing data at a sensor (110) disposed adjacent an optical director (202), the optical director (202) directing light onto an array of cells (200) thereof in a directionally segmented manner;
using the first and second pairs of distinguishing data to estimate respectively a first angle (θ₁) subtended by the first pair of spaced light sources (106, 108) from the array of cells (200) and a second angle (θ₂) subtended by the second pair of spaced light sources from the array of cells (200);
estimating a closest common position in space to surfaces respectively associated with the first and second estimated angles (θ₁, θ₂), the surfaces being estimated using first and second pairs of a priori coordinate data respectively associated with the first and second pairs of light sources.
